Europäisches Patentamt

European Patent Office

Office européen des brevets

(11) Numéro de publication: **0 248 041**
**B1**

(12) **FASCICULE DE BREVET EUROPÉEN**

(45) Date de publication du fascicule du brevet:
**19.04.89**

(21) Numéro de dépôt: **86906750.4**

(22) Date de dépôt: **27.11.86**

(86) Numéro de dépôt international:
**PCT/CH 86/00165**

(87) Numéro de publication internationale:
**WO 87/03530 (18.06.87 Gazette 87/13)**

(51) Int. Cl.⁴: **B 28 B 23/00,** B 30 B 11/06 //
A47J36/30

(54) **PROCEDE DE FABRICATION D'UN ELEMENT CHAUFFANT.**

(30) Priorité: **06.12.85 CH 5224/85**

(43) Date de publication de la demande:
**09.12.87 Bulletin 87/50**

(45) Mention de la délivrance du brevet:
**19.04.89 Bulletin 89/16**

(84) Etats contractants désignés:
**AT BE DE FR GB IT NL SE**

(56) Documents cité:
**WO-A-83/00425**
**US-A-1 792 844**

(73) Titulaire: **POZEL S.A., Grand'Rue, 56, CH- 1700
Fribourg (CH)**

(72) Inventeur: **SPRETER, Victor, 25, chemin de Ruite,
CH- 1252 Meinier (CH)**
Inventeur: **ZELLWEGER, Conrad, 5, chemin des
Voirons, CH- 1224 Chêne- Bougeries (CH)**

(74) Mandataire: **Ardin, Pierre, PIERRE ARDIN & CIE
22, rue du Mont- Blanc Case postale 60, CH- 1211
Genève 1 (CH)**

LIBER, STOCKHOLM 1989

## Description

On connaît des éléments chauffants en forme de galette ou de carreau comportant une couche en matière réfractaire thermiquement isolante, une couche réactive constituée d'au moins un métal ou métalloïde, finement divisé, mélangé à au moins un oxydant, également finement divisé, et une couche conductrice et diffusante de la chaleur, la couche réfractaire comportant des parois perpendiculaires créant un chemin de réaction pour la couche réactive. Des éléments de ce type sont décrits par exemple dans le brevet européen N° 0 084 532 (& WO-A-8 300 425).

Ces élément peuvent être obtenus par coulées successives. La couche isolante peut par exemple être constituée par du plâtre renforcé par un matériau fibreux tel la fibre de verre. Le mélange fibre de verre/plâtre est additionné d'eau et la masse liquide ainsi obtenue est coulée dans un moule approprié de façon à obtenir une galette comportant sur une de ses faces une rigole profonde formée par des nervures moulées perpendiculairement au plan de la galette, rigole qui forme un parcours déterminé. Après la prise du plâtre, la galette est démoulée et l'on coule dans la rigole le mélange réactif amené à l'état fluide par adjonction d'un liquide pouvant contenir un liant. Ce liquide peut par exemple être de l'eau additionnée d'un faible pourcentage de silicate. Une partie du liquide est progressivement absorbée par le plâtre et la masse réactive se densifie. Des que la masse réactive a atteint une consistance suffisante, on dépose à sa surface la couche diffusante et conductrice qui peut être soit une feuille de métal, tel de l'aluminium ou une couche pulvérulente consistant en une poudre métallique ou autre élément conducteur de chaleur additionné d'un liant incombustible tel du silicate. Ensuite, l'ensemble ainsi formé est chauffé afin d'évaporer les éléments liquides qu'il contient. Si ce procédé est relativement facile à mettre en oeuvre, il présente néanmoins un certain nombre d'inconvenients qui rendent la fabrication de l'élément lente et coûteuse. La prise du plâtre nécessite un minimum de 15 minutes, de même que la densification de la couche réactive prend un temps appréciable. Il est connu que pour pouvoir être coulé, le plâtre doit être additionné de son poids d'eau et l'évaporation de cette eau nécessite de grandes quantités d'énergie.

L'objet de la présente invention est de permettre une fabrication rapide en grande série de l'élément de chauffe en question. Cette invention se prête à la constitution d'une chaîne de fabrication entièrement automatisée, permettant de réaliser ces éléments de façon très fiable à un prix très bas.

A cet effet, l'invention a pour objet un procédé de fabrication d'un élément chauffant en forme de galette et comprenant un support de forme générale aplatie, en matière réfractaire thermiquement isolante, ce support présentant des parois sensiblement perpendiculaires a son étendue, ces parois définissant entre elles un chemin creux, dans lequel est disposé un mélange réactif exothermique finement divisé, caractérisé en ce qu'on dépose sur un support temporaire le mélange réactif en lui donnant la contre-forme dudit chemi creux et en e qu'on dépose sur ce mélange réactif ainsi formé la matière réfractaire liquide ou pulvérulente pour former les dites parois définissant le chemin creux et le support isolant, cette matière étant ensuite soumise à un traitement provoquant son durcissement.

Le dessin annexé représente schématiquement deux exemples de mise en oeuvre du procédé faisant l'objet de l'invention.

La figure 1 est une coupe d'une première galette selon son plan principal.

La figure 2 en est une coupe selon la ligne II - II de la figure 1.

Les figures 3 à 7 montrent des phases successives du procédé de fabrication de l'élément chauffant selon les figures 1 et 2.

La figure 8 est une coupe d'une autre galette selon son plan principal.

La figure 9 est une coupe selon les lignes IX - IX de la figure 8.

Les figures 10 à 13 montrent des phases successives du procédé de fabrication de l'élément chauffant selon les figures 8 et 9.

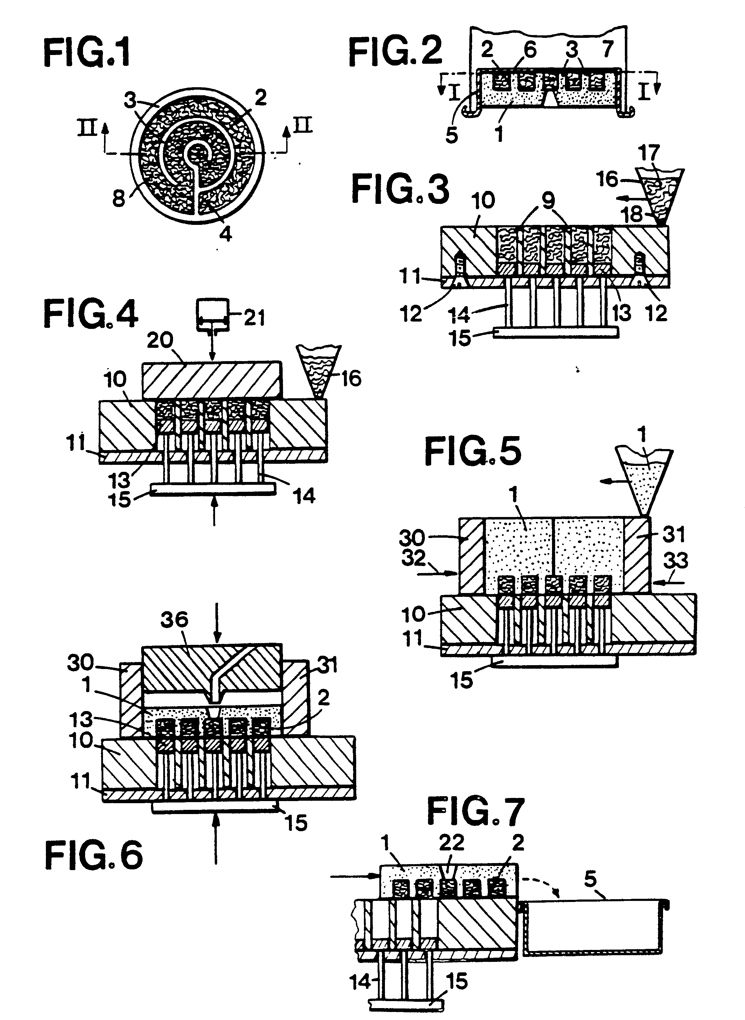

Les figures 1 et 2 montrent un élément chauffant en coupe. Cet elément chauffant est constitué par une couche en matière réfractaire 1 comportant des parois perpendiculaires 3 créant un parcours de réaction 8 dans lequel est disposé un mélange réactif exothermique 2, ce parcours partant du centre et suivant le chemin fléché pour aboutir en 4 à la fin du parcours. Cet ensemble est solidaire d'une coupelle métallique 5 dont la face 6 constitue une couche diffusant la chaleur produite par la masse réactive 2. La coupelle métallique 5 peut par exemple être obtenue par emboutissage et elle peut être agrafée par roulage à la paroi 7 d'un récipient qui contiendra le produit à chauffer. Cet ensemble est obtenu par le procédé décrit ci-après.

Il est fait usage d'un outil de moulage du genre de ceux couramment employés dans l'industrie du métal fritté. Il consiste en une plaque 10 (figure 3) en matière résistante, par exemple de l'acier. Dans cette plaque, on découpe par exemple par machine à électro-érosion à fil un chemin 8 selon plan montré à la figure 1. Une plaque de base 11 maintenue par des vis 12 supporte les parois 9 laissées lors du découpage. Un élément poussoir 13, ayant la forme du parcours évidé 8, est ajusté dans la plaque 10. Cet élément 13 peut être mû dans la direction perpendiculaire à la plaque 10 par l'intermédiaire de tiges 14 passant dans des ouvertures pratiquées dans la plaque de base 11, ces tiges étant solidaires d'un disque 15. Comme le montre la figure 3, une trémie 16 remplie du mélange réactif pulvérulent 17, obturée à sa base 18 par la plaque 10, est déplacée parallèlement à la face supérieure de cette plaque 10 de façon à passer au-dessus de la partie découpée et à remplir la cavité formée avec le mélange pulvérulent 17 qui s'échappe du bas de la trémie 16.

Lorsque l'outil de moulage est rempli de mélange réactif pulvérulent, on place sur la plaque 10 une plaque 20 (figure 4) maintenue en appui contre la plaque 10 par un moyen de serrage, tel qu'un vérin 21. Ensuite, on applique une force de compression symbolisée par la flèche 22 sur le disque 15 pour comprimer par l'intermédiaire des tiges 14 et de l'élément poussoir 13 le contenu du moule contre la plaque 20.

La figure 4 montre la position des différents éléments lors de la fin de la compression. Dès que la force de compression est atteinte, on relache le vérin 21, on enlève la plaque 20, puis on déplace le disque 15 pour éjecter de l'outil de moulage l'élément réactif ainsi obtenu. Le dispositif d'éjection s'arrête lorsque la base de l'objet est au niveau de la face supérieure de la plaque 10.

Le mélange réactif pulvérulent est additionné d'une quantité adéquate d'un agent agglomérant, tel un faible pourcentage de liquide liant, ou d'un colloïde, telle une poudre d'argile, etc. Il est bien connu en pyrotechnique que si lors de la compression on dépasse un certain taux, le mélange réactif peut devenir inactif. On ne peut donc utiliser les taux de compression généralement utilisés pour le frittage des métaux et, de ce fait, on obtient une pièce moulée relativement fragile et, vu sa configuration, pratiquement impossible à manipuler.

Dans l'opération suivante, on bloque le disque 15 dans sa dernière position. L'élément réactif ainsi formé est surmoulé sur place avec la matière réfractaire 1. A cet effet, on pose sur la plaque 10 un moule composé de deux demi-coquilles 30 et 31 maintenues ensemble par des moyens de serrage symbolisés par les flèches 32 et 33 (figure 5). Ce moule entoure complètement la masse réactive. Le moule est ensuite rempli avec une matière isolante pulvérulente additionnée d'un liant. Cette matière est ensuite comprimée par un piston 36 (figure 6) enrobant ainsi complètement la masse réactive à l'exception de la face de cette dernière qui est en contact avec l'éjecteur. Après avoir retiré le piston 36 (figure 7), on écarte les deux demi-coquilles 30 et 31 formant le moule de surmoulage. Le piston de compression est muni d'un organe emporte-pièce détachant une carotte dans la masse isolante, créant ainsi un accès 22 à la masse reactive permettant d'activer cette dernière.

L'objet ainsi formé est suffisamment solide pour pouvoir être manipulé délicatement. Il peut notamment être transféré dans la coupelle 5 et l'ensemble ainsi forme est placé dans une presse qui, à l'aide d'un piston adéquat, comprime encore une fois l'ensemble masse reactive et masse isolante de façon à lui faire épouser parfaitement la forme de la coupelle.

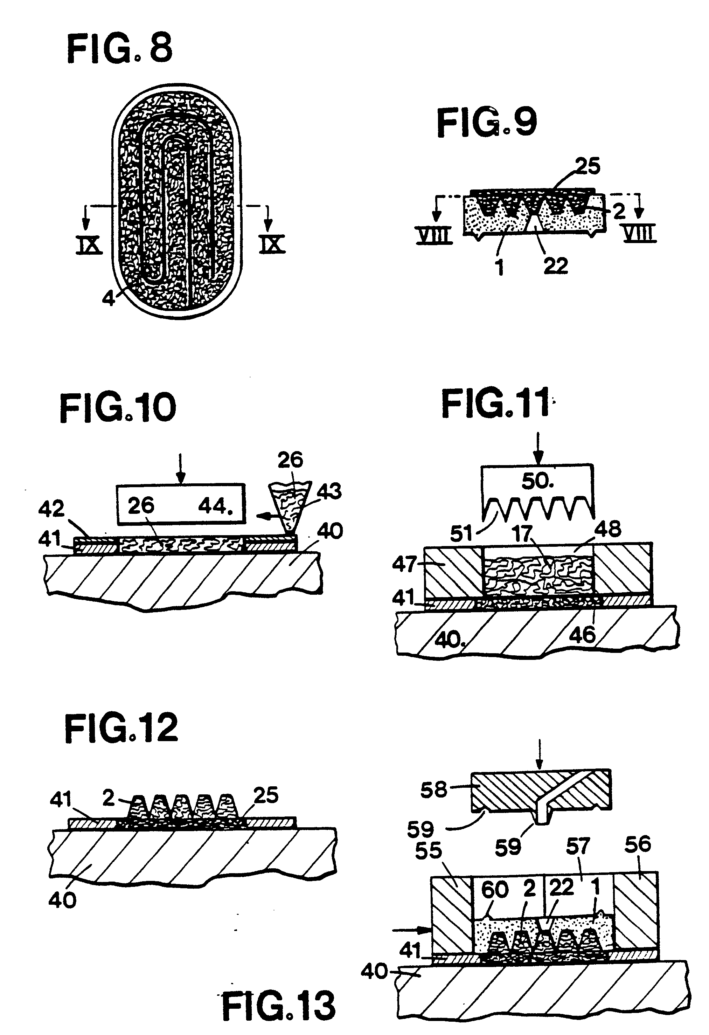

Les figures 8 et 9 représentent un élément chauffant du même genre que celui des figures 1 et 2, mais dans lequel la coupelle métallique 5 est remplacée par une couche diffusante de la chaleur qui est constituée par une couche 25 faisant partie de l'élément chauffant et obtenue par un mélange pulvérulent aggloméré.

Pour confectionner cet élément chauffant, on procède de la manière suivante. On place sur une base 40, comme représenté à la figure 10, un chablon ou gabarit consistant en une plaque 41 ayant l'épaisseur désirée de la couche de dispersion de la chaleur, plaque présentant une ouverture ayant le contour de ladite couche. Un deuxième chablon 42 de forme similaire est placé sur le premier. L'espace ainsi formé par les deux chablons superposés est rempli avec un mélange pulvérulent 26 consistant en une masse bonne conductrice de la chaleur, telle par exemple une poudre métallique, du carbure de silicium, etc., additionnée d'un liant inorganique approprié tel qu'un silicate. Cette masse, qui a à peu près la consistance d'un sable humide, peut être déposée à l'aide d'une trémie 43 dans le logement formé par les chablons 41 et 42. On vient ensuite comprimer cette masse à l'aide d'un piston 44. Lors de la compression, cette masse diminue sensiblement de volume et l'épaisseur du chablon 42 sera choisie de façon telle que la masse conductrice aura, après compression, l'épaisseur du chablon 41. Une fois la compression effectuée, on retire le piston 44 ainsi que le chablon 42. La couche conductrice de chaleur ainsi formée peut être déplacée en glissant le chablon 41, avec son contenu, sur la base 40. On place ensuite sur le chablon 41, contenant la couche diffusante 46, un moule en forme de cadre 47 comportant une ouverture 48 dans laquelle on dépose, sous forme d'une couche d'épaisseur sensiblement égale, le mélange réactif 17 sous forme pulvérulente, mélange additionné d'un agglomerant ou d'un liant. Ce mélange est ensuite comprimé à l'aide d'un piston 50 comportant sur sa face venant en contact avec le mélange réactif une gravure 51 dont le contour est celui de la couche réactive à former.

Après cette compression, on retire le piston 50 et on enlève le moule 47 pour obtenir l'ensemble représenté à la figure 12, à savoir la couche diffusante 25 toujours encadrée par le chablon 41, sur laquelle est déposé un serpentin de mélange réactif 2.

Il est avantageux de donner à la gravure 51 du piston 50 une dépouille suffisante pour que la masse comprimée se démoule par gravité. Si cela s'avère nécessaire, on peut parfaitement munir l'empreinte créée dans le piston 50 d'un dispositif d'éjection par exemple similaire à celui décrit dans la première forme d'exécution.

L'ensemble représenté à la figure 12 peut ensuite être transféré par glissement sur une table 40 et l'on place alors deux éléments 55 et 56 sur le chablon 41 pour former une enceinte 57 ayant pour section le pour tour de l'élément chauffant terminé. Cette enceinte 57 est remplie d'un mélange pulvérulent consistant en une matière réfractaire isolante granulée, additionnée d'un liant inorganique, par exemple un silicate. Cette matière est comprimée à l'aide d'un piston 58 dont la face active est conformée pour imprimer dans la matière réfractaire une nervure 60 de support et un logement 22 dont le fond est constitué par le mélange réactif. Ce logement a pour but de permettre la mise à feu du mélange réactif.

Après avoir retiré le piston 58, on peut dégager l'ensemble ainsi formé en écartant l'un de l'autre les éléments 55 et 56 formant l'enceinte. L'ensemble obtenu est suffisamment solide pour pouvoir être manipulé avec précaution pour être placé sur un support permettant de le transporter dans un four pour le traitement nécessaire à la solidification des liants et à l'évacuation des solvants utilisés dans les liants.

Pour la constitution de la couche isolante, un minéral expansé commercialisé sous le nom de Perlite est particulièrement avantageux. Il permet la confection d'une couche isolante très légère, à grand pouvoir isolant, et la forme sphéroïdale de ses grains permet un remplissage aisé de l'élément à surmouler. On pourrait aussi réaliser la couche isolante en plâtre qu'on laisserait ensuite reposer jusqu'à durcissement.

On peut bien entendu utiliser divers liants pour constituer les différentes couches et l'on a obtenu des bons résultats, notamment avec du silicate de soude, du silicate de potassium, l'acide phosphorique et ses sels ou des esters de l'acide silicique.

## Revendications

1. Procédé de fabrication d'un élément chauffant en forme de galette et comprenant un support de forme générale aplatie, en matière réfractaire thermiquement isolante, ce support présentant des parois sensiblement perpendiculaires à son étendue, ces parois définissant entre elles un chemin creux, dans lequel est disposé un mélange réactif exothermique finement divisé, caractérisé en ce qu'on dépose sur un support temporaire (13, 40) le mélange réactif (2) en lui donnant la contre-forme dudit chemin creux et en ce qu'on dépose sur ce mélange réactif ainsi formé la matière réfractaire liqide ou pulvérulente pour former lesdites parois définissant le chemin creux et le support isolant, cette matière étant ensuite soumise à un traitement provoquant son durcissement.

2. Procédé selon la revendication 1, caractérisé en ce qu'on rend une couche de matière diffusante de la chaleur solidaire de la face libre du mélange réactif.

3. Procédé selon la revendication 1 ou 2, caractérisé en ce qu'on dépose tout d'abord la couche de matière diffusante sur le support temporaire, en ce qu on recouvre cette couche avec le mélange réactif, en ce qu'on forme des rainures dans le mélange réactif de façon à définir les limites dudit chemin creux.

4. Procédé selon la revendication 3, caractérisé en ce qu'on utilise un chablon pour définir les bords de la matière diffusante, puis un moule (47) en forme de cadre pour permettre d'appliquer une couche de mélange réactif sur la couche diffusante, en ce qu'on comprime le mélange réactif à l'intérieur dudit cadre au moyen d'un poinçon, présentant des nervures pour former lesdites rainures, en ce qu'on recouvre le mélange réactif d'une couche de matière réfractaire déposée à l'intérieur d'un moule.

5. Procédé selon la revendication 4, caractérisé en ce qu'on soumet cette couche à une compression effectuée à l'aide d'un poinçon.

6. Procédé selon la revendication 5, caractérisé en ce qu'on utilise un poinçon présentant une partie saillante destinée a menager une ouverture dans le support en matière réfractaire, cette ouverture s'étendant jusqu'au mélange réactif afin d'en permettre la mise à feu.

7. Procédé selon la revendication 2, caractérisé en ce qu'on utilise un outil de moulage présentant des creusures définissant le chemin de combustion, le fond de ces creusures étant constitué par un élément poussoir (13) de forme correspondante auxdites creusures, en ce qu'on remplit ces dernières par leurs extrémités supérieures ouvertes, en ce qu'on ferme ensuite ces ouvertures supérieures et en ce qu'on comprime le mélange réactif dans les creusures, en ce qu'on découvre lesdites creusures et on déplace l'élément poussoir (13) pour amener la matière comprimée au niveau de la face supérieure de l'outil de moulage, en ce qu'on place un moule (30, 31) en forme de cadre autour de l'élément comprimé et en ce qu'on remplit ce cadre de matière réfractaire.

8. Procédé selon la revendication 7, caractérisé en ce qu'on comprime la matière réfractaire au moyen d'un poinçon.

9. Procédé selon la revendication 7, caractérise en ce qu'on utilise un poussoir présentant un emport-pièce destiné à ménager une ouverture (22) dans le support en matière réfractaire, cette ouverture (22) s'étendant jusqu'au mélange réactif (2) afin d'en permettre la mise à feu.

10. Procédé selon l'une des revendications 6 à 9, caractérisé en ce qu'on réalise le support réfractaire à l'aide d'une matière réfractaire, isolante et granulée, additionnée d'un liant et en ce que, après avoir comprimé cette masse, on chauffe le tout pour évaporer la partie volatile du liant et augmenter la résistance mécanique de la galette.

## Claims

1. A method for fabricating a heating element in the form of a flat cake comprising a support of generally flattened form and of thermally insulating refractory material, this support having walls substantially perpendicular to its length, these walls defining a hollow path therebetween in which is disposed an exothermic, finely divided, reactive mixture, characterized in that the reactive mixture (2) is deposited on a temporary support (13, 40) and provided with the counter-shape of said hollow path and in that the liquid or pulverulent refractory material is deposited on this reactive mixture thus formed so as to form said walls defining the hollow path and the insulating support, this material being subsequently subjected to a treatment effecting its hardening.

2. A method according to claim 1, characterized in that a layer of heat diffusing material is rendered solid with the free face of the reactive mixture.

3. A method according to claim 1 or 2, characterized in that, firstly, the layer of diffusing material is deposited onto the temporary support, in that this layer is covered with the reactive mixture, and in that grooves are formed in the reactive mixture in a manner so as to define the limits of the said hollow path.

4. A method according to claim 3, characterized in that a template is used to define the edges of the diffusing material, then a mould (47) in the shape of a frame is applied to permit the application of a layer of reactive mixture onto the diffusing layer, and in that the reactive mixture is compressed within the said frame by means of a die having ribs for forming the said grooves, and in that the reactive mixture is covered with a layer of refractory material deposited inside a mould.

5. A method according to claim 4, characterized in that this layer is subjected to compression effected with the aid of a die.

6. A method according to claim 5, characterized in that a die is used having a projecting part intended to provide an opening in the refractive material support, this opening extending up to the reactive mixture in order to permit the firing of the latter.

7. A method according to claim 2, characterized in that a moulding tool is used having grooves defining the combustion path, the bottom of these grooves being constituted by a pusher element (13) of a shape corresponding to the said grooves, in that the latter are filled through their open upper ends, in that these upper openings are subsequently closed and in that the reactive mixture is compressed in the grooves, in that said grooves are uncovered and the pusher element (13) is displaced to bring the compressed material to the level of the upper face of the moulding tool, in that a mould (30, 31) in the shape of a frame is placed around the compressed element and in that this frame is filled with refractive material.

8. A method according to claim 7, characterized in that the refractory material is compressed by means of a die.

9. A method according to claim 7, characterized in that a pusher having a press punch designed to provide an opening (22) in the refractive material support is used, this opening (22) extending up to the reactive mixture (2) in order to permit its firing.

10. A method according to any one of claims 6 to 9, characterized in that the refractive support is formed with the aid of an insulating and granulated refractive material, with a binder added thereto, and in that, after having compressed this mass, the whole is heated to evaporate off the volatile part of the binder and increase the mechanical resistance of the flat cake.

## Patentansprüche

1. Verfahren zur Herstellung eines Heizelementes in Form einer Scheibe, das einen Träger von allgemeiner abgeflachter Form aus hitzebeständigem thermisch isolierendem Material umfaßt, wobei dieser Träger entlang seiner Erstreckung im wesentlichen lotrechte Wände aufweist und wobei diese Wände zwischen sich einen hohlen Kanal bestimmen, in den ein wärmeabgebendes fein verteiltes Reaktionsgemisch eingebracht ist, dadurch gekennzeichnet, daß das Reaktionsgemisch (2) auf einem Zwischenträger (13, 40) abgesetzt wird, wobei diesem die Gegenform des hohlen Kanals verliehen wird, und daß auf diesen so gebildeten Reaktionsgemisch das flüssige oder pulverförmige hitzebeständige Material abgesetzt wird, um die Wände zu bilden, die den hohlen Kanal und den isolierenden Träger begrenzen, wobei dieses Material in der Folge einer Behandlung unterzogen wird, die sein Aushärten bewirkt.

2. Verfahren nach Anspruch 1, dadurch gekennzeichnet, daß eine Schicht aus wärmeverteilendem Material fest mit der freien Oberfläche des Reaktionsgsmisches verbunden ist.

3. Verfahren nach Anspruch 1 oder 2, dadurch gekennzeichnet, daß zuerst die Schicht aus verteilendem Material auf dem Zwischenträger abgesetzt wird, daß diese Schicht mit dem Reaktionsgemisch überzogen wird und daß Rillen in dem Reaktionsgemisch derart gebildet werden, daß sie den hohlen Kanal begrenzen.

4. Verfahren nach Anspruch 3, dadurch gekennzeichnet, daß eine Schablone verwendet wird, um die Ränder des verteilenden Materials zu bestimmen, danach eine rahmenförmige Form (47) verwendet wird, um das Aufbringen einer Schicht aus Reaktionsgemisch auf der verteilenden Schicht zu ermöglichen, daß das Reaktionsgemisch im Inneren des Rahmens mittels eines Stempels komprimiert wird, der Rippen aufweist, um die Rillen zu bilden, und daß das Reaktionsgemisch mit einer im Inneren einer Form abgesetzten Schicht aus hitzebeständigem Material überzogen wird.

5. Verfahren nach Anspruch 4, dadurch gekennzeichnet, daß diese Schicht einer mittels eines Stempels erzeugten Kompression unterworfen wird.

6. Verfahren nach Anspruch 5, dadurch gekennzeichnet, daß ein Stempel verwendet wird, der einen vorstehenden Teil aufweist, der dazu vorgesehen ist, eine Öffnung in dem Träger aus hitzebeständigem Material zu schaffen, wobei diese Öffnung bis zu dem Reaktionsgemisch reicht, um das Zünden zu ermöglichen.

7. Verfahren nach Anspruch 2, dadurch gekennzeichnet, daß ein Formwerkzeug verwendet wird, das Ausnehmungen aufweist, die den Brennkanal bestimmen, wobei der Boden dieser Ausnehmungen durch ein Schiebeelement (13) gebildet wird, dessen Form diesen Ausnehmungen entspricht, daß letztere über ihre offenen oberen Enden gefüllt werden, daß danach diese oberen Öffnungen verschlossen werden und daß diese Ausnehmungen abgedeckt werden und das Schiebeelement (13) versetzt wird, um das komprimierte Material auf das Niveau der oberen Fläche des Formwerkzeugs zu bringen, daß eine rahmenförmige Form (30, 31) um das komprimierte Element angeordnet wird und daß dieser Rahmen mit hitzebeständigem Material gefüllt wird.

2. Verfahren nach Anspruch 7, dadurch gekennzeichnet, daß das hitzebeständige Material mittels eines Stempels komprimiert wird.

9. Verfahren nach Anspruch 7, dadurch gekennzeichnet, daß ein Schieber, der ein Stanzorgan aufweist, verwendet wird, das dazu vorgesehen ist, eine Öffnung (22) in dem Träger aus hitzebeständigem Material zu schaffen, wobei diese Öffnung (22) bis zu dem Reaktionsgemisch (2) reicht, um das Zünden zu ermöglichen.

10. Verfahren nach einem der Ansprüche 6 bis 5, dadurch gekennzeichnet, daß ein hitzebeständiger Träger aus einem hitzebeständigen isolierenden körnigen Material hergestellt wird, dem ein Bindemittel beigemengt wurde, und daß nach der Kompression dieser fasse die gesamte Einheit erhitzt wird, um den flüchtigen Anteil des Bindemittels zu verdampfen und die mechanische Beständigkeit der Scheibe zu erhöhen.

FIG.1

FIG.2

FIG.3

FIG.4

FIG.5

FIG.6

FIG.7

**FIG. 8**

**FIG.9**

25
2
1 22
VIII IX

4

**FIG.10**

26
26 44. 43
42
41 40

**FIG.11**

50.
51 17 48
47
41
40. 46

**FIG.12**

41 2 25
40

**FIG.13**

58
59
59 57 56
55
60 2 22 1
41
40